# EUROPÄISCHE PATENTANMELDUNG

(11) **EP 1 855 179 A2**
(43) Veröffentlichungstag der Anmeldung: **14.11.2007**
(21) Anmeldenummer: 07006191.6
(22) Anmeldetag: 26.03.2007
(51) Int. Cl.: G06F 1/20

(54) **Computersystem mit einer Kühlanordnung**

(30) Priorität: 02.05.2006 DE 102006020177
(71) Anmelder: Fujitsu Siemens Computers GmbH, 80807 München (DE)
(72) Erfinder: Köhler, Friedrich, 86405 Meitingen (DE); Schelshorn, Lorenz, 86179 Augsburg (DE)
(74) Vertreter: Epping - Hermann - Fischer

(57) **Zusammenfassung**

Das Computersystem zeichnet sich dadurch aus, dass ein Strömungsregulator (5) vor einer einem Lüfter (2b) zugeordneten Luftaustrittsöffnung (3b) einer Kühlanordnung (1) vorgesehen ist. Der Strömungsregulator (5) weist mindestens ein Rückschlagelement (7). Durch den Strömungsregulator (5) werden unvorteilhafte Strömungsverhältnisse im Computersystem verhindert. Insbesondere wird durch das Rückschlagelement (7) ein Rückströmen von Kühlluft aus dem Computersystem durch die Luftaustrittsöffnung (3b) in die Kühlanordnung (1) unterbunden, falls der Lüfter (2b) nicht in Betrieb ist.

## Beschreibung

Die Erfindung betrifft ein Computersystem mit einer Kühlanordnung, insbesondere ein Computersystem, bei dem mehrere Steckplätze für Prozessoren vorgesehen sind.

Zum Abführen von entstehender Verlustwärme weisen Computersysteme meist eine oder mehrere Kühlanordnungen auf. Quellen von Verlustwärme in Computersystemen sind beispielsweise die Prozessoren, Netzteile, Festplatten und Grafikkarten. Die Wärmequellen sind dabei üblicherweise direkt oder indirekt (Wasserkreislauf, Wärme leitendes Element, heat pipe) mit Kühlkörpern verbunden, die zur besseren Wärmeabfuhr in dem Luftstrom eines Lüfters angeordnet sind. Ein Lüfter kann dabei zur Unterstützung der Kühlung mehrerer Wärmequellen eingesetzt werden.

Wegen der zunehmend größeren Verlustleistung in immer leistungsfähigeren Computersystemen ist durchaus üblich, mehrere Kühlanordnungen oder eine Kühlanordnung mit mehreren Lüftern vorzusehen. Ein Teil der Lüfter ist dabei oft obligatorisch, z. B. üblicherweise die zur Kühlung eines Netzteils oder eines Prozessors eingesetzten Lüfter. Andere der Lüfter können optional sein und nur in bestimmten Ausbaustufen des Computersystems notwendig sein. Beispielsweise kann ein Einbauplatz für einen Lüfter in einer Kühlanordnung eines Computersystems zur Kühlung eines optional einsetzbaren Prozessors eines Mehrprozessorsystems vorgesehen sein, der in der Grundausbaustufe des Computersystems, in der nur ein Prozessor eingesetzt wird, zunächst unbestückt ist. Ebenfalls kann es vorkommen, dass optionale Lüfter zwar vorhanden sind, aber nur in bestimmten Belastungssituationen von einer entsprechenden Temperatur- bzw. Lüftersteuerung zugeschaltet werden.

In all diesen Fällen tritt das Problem auf, dass ein fehlender oder nicht eingesetzter Lüfter einer Kühlanordnung zu unvorteilhaften Strömungsverhältnissen im Computersystem führen kann. Insbesondere kann eine ungünstige Rückströmung durch die Kühlanordnung als Folge eines von den weiteren Lüftern im Computersystem erzeugten Überdrucks auftreten.

Zur Lösung dieses Problems ist beispielsweise bekannt, herausbrechbare Abdeckungen an den Luftaustrittsöffnungen einer Kühlanordnung vorzusehen, falls hinter der entsprechenden Luftaustrittsöffnung ein Lüfter zwar optional vorgesehen, aber nicht eingesetzt ist. Beim Nachrüsten des Lüfters kann die Abdeckung dann herausgebrochen werden. Diese Lösung ist zwar günstig herzustellen, kann jedoch z. B. beim Rückbau des Systems in den Grundausbauzustand nicht ohne Weiteres rückgängig gemacht werden.

Als weitere Lösung ist aus der Druckschrift DE 102004045694 bekannt, in nicht bestückte Prozessorsteckplätze eines Mehrprozessor-Computersystems eine Nachbildung des Prozessors samt Kühlkörper, einen so genannten CPU-Dummy, einzustecken, um in jedem Ausbauzustand des Computersystems die gleichen Strömungsverhältnisse herzustellen. Diese Lösung ist jedoch nur auf Prozessorsteckplätze anwendbar und darüber hinaus nicht geeignet, eine Rückströmung zu verhindern, falls der Lüfter, der dem Steckplatz mit dem CPU-Dummy zugeordnet ist, entweder nicht vorhanden ist oder durch die Temperatur- bzw. Lüftersteuerung nicht betrieben wird.

Es ist daher eine Aufgabe der Erfindung, ein Computersystem mit einer Kühlanordnung anzugeben, in dem unabhängig von dem Einsatz optionaler Lüfter eine unvorteilhafte Beeinflussung der Strömungsverhältnisse möglichst verhindert wird.

Diese Aufgabe wird durch ein Computersystem mit einer Kühlanordnung gemäß Patentanspruch 1 gelöst. Das Computersystem zeichnet sich dadurch aus, dass ein Strömungsregulator vor einer Luftaustrittsöffnung der Kühlanordnung vorgesehen ist, wobei der Strömungsregulator mindestens ein Rückschlagelement aufweist. Durch den Strömungsregulator werden unvorteilhafte Strömungsverhältnisse im Computersystem verhindert, insbesondere wird durch das Rückschlagelement ein Rückströmen von Kühlluft aus dem Computersystem durch die Luftaustrittsöffnung in die Kühlanordnung verhindert.

Gemäß einer vorteilhaften Weiterbildung der Erfindung ist der Strömungsregulator derart ausgeführt, dass ein Ausströmen von Kühlluft durch die Luftaustrittsöffnung möglich ist, wenn ein laufender Lüfter in der Kühlanordnung vorhanden ist, und eine Rückströmung von Kühlluft in die Luftaustrittsöffnung bei nicht vorhandenem oder nicht oder unzureichend laufendem Lüfter verhindert ist. Ein optionaler Lüfter trägt somit zur Kühlung des Computersystems bei, wenn er in Betrieb ist. Gleichzeitig werden die Strömungsverhältnisse im Kühlsystem nicht ungünstig beeinflusst, wenn der Lüfter nicht betrieben wird oder nicht vorhanden ist.

In weiteren vorteilhaften Ausgestaltungen der Erfindung ist der Lüfter der Kühlanordnung zur Kühlung eines Prozessors des Computersystems vorgesehen. Insbesondere ist das Strömungselement so ausgebildet, dass es in einen Steckplatz für einen Prozessor einsteckbar ist. Auf diese Weise wird in einem Mehrprozessor-Computersystem, bei dem die zur Kühlung der Prozessoren eingesetzten Lüfter gleichzeitig zur Kühlung weiterer Komponenten des Systems eingesetzt werden, unabhängig von der Bestückung des Computersystems mit Prozessoren die Kühlung dieser weiteren Komponenten gewährleistet.

Weitere vorteilhafte Ausgestaltungen der Erfindung sind in den abhängigen Ansprüchen angegeben.

Im Folgenden wird die Erfindung anhand eines Ausführungsbeispiels mit Hilfe von drei Figuren näher erläutert. Es zeigen:
Figur 1 eine perspektivische Darstellung einer Kühlanordnung eines Computersystems,
Figur 2 eine perspektivische Darstellung eines Teils der in Figur 1 gezeigten Kühlanordnung ohne eingesetzten optionalen Lüfter und
Figur 3 eine perspektivische Darstellung eines Teils der in Figur 1 gezeigten Kühlanordnung mit eingesetztem optionalen Lüfter.

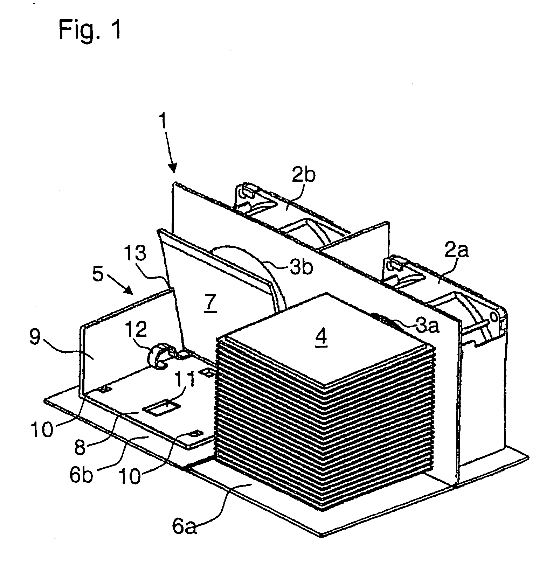

Der in Figur 1 perspektivisch dargestellte Ausschnitt aus einem Computersystem zeigt eine Kühlanordnung 1, bestückt mit zwei Lüftern 2a und 2b, für die in der Kühlanordnung 1 jeweils eine zugeordnete Luftaustrittsöffnung 3a und 3b vorgesehen ist. Vor der Luftaustrittsöffnung 3a ist ein Prozessor mit Kühlkörper 4 angeordnet. Vor der Luftaustrittsöffnung 3b ist ein Strömungsregulator 5 angeordnet. Der Prozessor mit Kühlkörper 4 bzw. der Strömungsregulator 5 sind in jeweils einem Steckplatz für Prozessoren 6a, 6b des Computersystems eingesteckt. Der Strömungsregulator 5 weist ein Rückschlagelement 7, das der Luftaustrittsöffnung 3b zugewandt ist, sowie ein Basiselement 8 auf. An der dem Prozessor mit Kühlkörper 4 abgewandten Seite ist das Basiselement 8 zu einem Seitenteil 9 abgewinkelt. In seiner dem Steckplatz 6b zugewandten Fläche weist das Basiselement 8 Rasthaken 10 sowie ein Zentriermittel 11 auf. Das Rückschlagelement 7 und das Basiselement 8 sind mit einem hier nicht sichtbaren Scharnier sowie Federn 12 verbunden. Das Rückschlagelement 7 weist an einer Seite eine Stufe auf, die als Anschlag 13 mit dem Seitenteil 9 zusammenwirkt.

Die gezeigte Kühlanordnung 1 ist z. B. zum Einsatz in einem Mehr-Prozessor-Computersystem vorgesehen, das mit den Steckplätzen 6a und 6b Einsteckmöglichkeiten für zwei Prozessoren bereitstellt. Entsprechend bietet die Kühlanordnung 1 die Möglichkeit, die beiden Lüfter 2a und 2b zur Kühlung der zwei einsteckbaren Prozessoren aufzunehmen.

In der Figur 1 ist das Computersystem in einem Grundausbauzustand gezeigt, in dem nur der eine Steckplatz 6a mit dem Prozessor mit Kühlkörper 4 bestückt ist. Statt eines zweiten Prozessors in Steckplatz 6b ist der Strömungsregulator 5 eingesetzt. Trotz der Bestückung des Computersystems mit nur dem einen Prozessor mit Kühlkörper 4 sind die beiden Lüfter 2a und 2b zur Verwendung in der Kühlanordnung 1 vorhanden. Ein Grund hierfür kann beispielsweise sein, dass der Lüfter 2b zur Unterstützung der Kühlung weiterer, im Computersystem angeordneter Bauelemente benötigt wird.

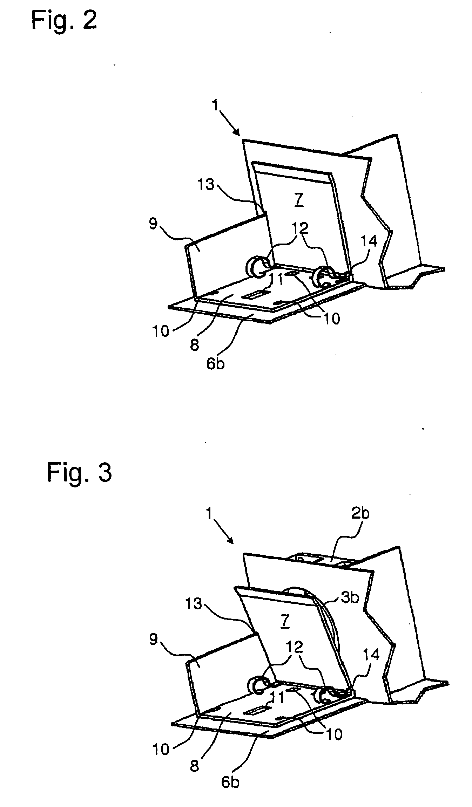

Der Strömungsregulator 5 und sein Zusammenspiel mit dem Lüfter 2b wird im Folgenden anhand der Figuren 2 und 3 näher erläutert.

Figur 2 zeigt den dem Steckplatz 6b zugeordneten Teil der Kühlanordnung 1 mit dem Strömungsregulator 5. Der Übersichtlichkeit halber ist die andere Hälfte der Kühlanordnung 1 samt Steckplatz 6a mit Prozessor mit Kühlkörper 4 und Lüfter 2a in der Darstellung weggelassen. Durch die gegenüber der Figur 1 geänderten Darstellung ist zusätzlich zu den bereits aus Figur 1 bekannten Elementen eine Scharnierangel 14 als Teil des Scharniers zwischen Basiselement 8 und Rückschlagelement 7 sichtbar. Weiterhin ist eine zweite der Federn 12, die zuvor hinter dem Prozessor mit Kühlkörper 4 verdeckt war, sichtbar.

Die Figur 2 zeigt einen Ausbauzustand des Systems ohne den optionalen Lüfter 2b. Der Strömungsregulator 5 greift über die Rasthaken 10 und das Zentriermittel 11 seines Basiselements 8 in den Steckplatz 6b für Prozessoren des Computersystems ein. Auf diese Weise ist das Basiselement 8 gegenüber dem Steckplatz 6b in seiner Position fixiert. Da die Kühlanordnung 1 im Computersystem ebenfalls festgelegt ist, ist das Basiselement 8 auch gegenüber der Kühlanordnung 1 in seiner Position festgelegt. Die Basisplatte ist zudem so ausgelegt, dass sie die empfindlichen Teile des Steckplatzes 6b, also z. B. die Kontakte und eventuell auch eine Verriegelungsmechanik, abdeckt und so vor Beschädigung und Verschmutzung schützt.

Das Rückschlagelement 7 ist in dem gezeigten Beispiel als eine Rückschlagklappe ausgeführt. Diese Rückschlagklappe ist drehbar um die Verbindungslinie zwischen Rückschlagelement 7 und Basiselement 8 durch das Scharnier gelagert. Die Federn 12 sind so angeordnet, dass die Rückschlagklappe in Richtung der Kühlanordnung 1 gedrückt wird und somit die Luftaustrittsöffnung 3b abdeckt, die folglich in dieser Figur nicht sichtbar ist. Ein eventuell durch weitere Lüfter, wie z. B. den Lüfter 2a, aufgebauter Überdruck vor dem Rückschlagelement 7 führt auf diese Weise nicht zum Entweichen (Rückströmen) von Kühlluft durch die Luftaustrittsöffnung 3b.

Zusätzlich kann durch die Formgebung des Strömungsregulators erreicht werden, dass im Computersystem Strömungsverhältnisse herrschen, wie sie auch bei einem eingesetzten Prozessor in Steckplatz 6b bestehen würden. So beeinflusst z. B. das abgewinkelte Seitenteil 9 eine Strömung quer zur Hauptströmungsrichtung der Lüfter. Die gezeigte Formgebung des Strömungsregulators 5 ist dabei aber lediglich als beispielhaft anzusehen. Eine Formgebung, die detaillierter an die Silhouette des Prozessors mit Kühlkörper 4 angepasst ist, ist selbstverständlich ebenso denkbar.

Die in der Figur 2 gezeigte Position nimmt das Rückschlagelement 7 nicht nur an, wenn der optionale Lüfter 2b nicht eingebaut ist, sondern ebenso, wenn dieser zwar eingebaut, aber durch eine Lüfterregelung, die den Lüfter 2b nur im Bedarfsfall einsetzt, gerade nicht angesteuert wird.

In Figur 3 ist in analoger Darstellung zu Figur 2 die Situation gezeigt, in der der Lüfter 2b vorhanden und in Betrieb ist. Der durch den Lüfter 2b auf der der Luftaustrittsöffnung 3b zugewandten Seite des Rückschlagelements 7 aufgebaute Luftüberdruck bewegt das Rückschlagelement 7 gegen die vorspannung der Federn 12 von der Luftaustrittsöffnung 3b weg und ermöglicht den Austritt von Kühlluft. Dabei bewirkt der Anschlag 13, dass das Rückschlagelement 7 sich nicht weiter als in der Figur dargestellt öffnet. Dieses dient im besonderen Fall des Ausführungsbeispiels wiederum dazu, die Strömungsverhältnisse eines eingesetzten Prozessors nachzuahmen.

In anderen Ausführungsformen kann ein solcher Anschlag 13 anders ausgelegt oder nicht vorhanden sein, sodass die Luftaustrittsöffnung 3b weiter freigelegt wird. Durch die Vorspannung und die Federkonstante der Federn 12 kann eingestellt werden, ab welchem Überdruck, und damit ab welcher Drehzahl des Lüfters 2b, die Luftaustrittsöffnung 3b freigegeben wird. Auch auf diese Weise kann der Strömungsregulator 5 den Erfordernissen der Kühlanordnung 1 angepasst werden.

Alternativ zur Ausgestaltung des Rückschlagelements 7 kann anstelle einer Rückschlagklappe auch vorgesehen sein, mehrere über oder nebeneinander angeordnete drehbar gelagerte Lamellen vorzusehen. Ebenso ist möglich, Folienelemente, die Windhosen nachempfunden sind, als Rückschlagelemente 7 einzusetzen.

Der erfindungsgemäße Strömungsregulator kann selbstverständlich nicht nur im Zusammenhang mit einer Kühlanordnung für Prozessoren, sondern ebenso im Zusammenhang mit weiteren Kühlanordnungen in einem Computersystem eingesetzt werden. Beispielsweise können in einem Computersystem mehrere Gehäuselüfter vorgesehen sein, die Kühlluft in das Computergehäuse hinein oder aus diesem heraus befördern. Sind diese Gehäuselüfter optional vorgesehen oder werden über eine Lüftersteuerung nur optional eingesetzt, bietet sich der Einsatz eines Strömungsregulators auch an dieser Stelle an, um ein Rückströmen von Kühlluft aus dem Gehäuse bzw. in dieses hinein zu verhindern. Für einen solchen Einsatz kann der Strömungsregulator vorteilhafterweise mit einem rahmenförmigen Basiselement versehen sein, das mit Rasthaken oder sonstigen Befestigungsmitteln direkt auf den Lüfter aufgesetzt werden kann.

### Bezugszeichenliste

- 1: Kühlanordnung
- 2a, b: Lüfter
- 3a, b: Luftaustrittsöffnung
- 4: Prozessor mit Kühlkörper
- 5: Strömungsregulator
- 6a, b: Steckplatz für Prozessor
- 7: Rückschlagelement
- 8: Basiselement
- 9: Seitenteil
- 10: Rasthaken
- 11: Zentriermittel
- 12: Federn
- 13: Anschlag
- 14: Scharnierangel

## Patentansprüche

1. Computersystem mit einer Kühlanordnung (1), **dadurch gekennzeichnet, dass**
ein Strömungsregulator (5) vor einer Luftaustrittsöffnung (3b) der Kühlanordnung (1) angeordnet ist, wobei der Strömungsregulator (5) mindestens ein Rückschlagelement (7) aufweist.

2. Computersystem nach Anspruch 1, **dadurch gekennzeichnet, dass** der Strömungsregulator (5) derart ausgeführt ist, dass ein Ausströmen von Kühlluft durch die Luftaustrittsöffnung (3b) möglich ist, wenn ein Lüfter (2b) in der Kühlanordnung (1) vorhanden und in Betrieb ist, und ein Rückströmen von Kühlluft in die Luftaustrittsöffnung (3b) verhindert ist, wenn der Lüfter (2b) nicht vorhanden ist oder nicht oder nur unzureichend in Betrieb ist.

3. Computersystem nach einem der Ansprüche 1 oder 2, **dadurch gekennzeichnet, dass**
der Strömungsregulator (5) ein Basiselement (8) aufweist, mit dem das mindestens eine Rückschlagelement (7) über ein Scharnier verbunden ist.

4. Computersystem nach Anspruch 3, **dadurch gekennzeichnet, dass**
eine oder mehrerer Federn (12) vorgesehen sind, durch die das mindestens eine Rückschlagelement (7) relativ zum Basiselement (8) derart positioniert ist, dass die Luftaustrittsöffnung (3b) abgedeckt ist, wenn der Lüfter (2b) nicht vorhanden ist oder nicht oder nur unzureichend in Betrieb ist.

5. Computersystem nach Anspruch 3, **dadurch gekennzeichnet, dass**
das mindestens eine Rückschlagelement (7) relativ zum Basiselement (8) so angeordnet ist, dass es durch die Schwerkraft derart positioniert ist, dass die Luftaustrittsöffnung (3b) abgedeckt ist, wenn der Lüfter (2b) nicht vorhanden ist oder nicht oder nur unzureichend in Betrieb ist.

6. Computersystem nach einem der Ansprüche 4 oder 5, bei dem die Federn (12) und/oder das mindestens eine Rückschlagelement (7) derart ausgeführt sind, dass das Rückschlagelement (7) von einem Luftstrom des Lüfters (2b) von der Luftaustrittsöffnung (3b) weggedrückt wird.

7. Computersystem nach einem der Ansprüche 3 bis 6, bei dem das Basiselement (8) Rasthaken (10) aufweist, mit dem es an dem Lüfter (2b) festlegbar ist.

8. Computersystem nach einem der Ansprüche 1 bis 7, bei dem der Lüfter (2b) der Kühlanordnung (1) geeignet ist, Luft aus einem Gehäuse des Computersystems heraus oder in dieses hinein zu befördern.

9. Computersystem nach einem der Ansprüche 1 bis 8, bei dem der Lüfter (2b) der Kühlanordnung (1) zur Kühlung eines Prozessors des Computersystems geeignet ist.

10. Computersystem nach Anspruch 9, bei dem das Basiselement (8) so ausgebildet ist, dass es in einen Steckplatz für den Prozessor einsteckbar ist.

11. Computersystem nach Anspruch 10, bei dem das Basiselement (8) an der dem mindesten einen Rückschlagelement (7) abgewandeten Seite Zentriermittel (11) und Rasthaken (10) aufweist, durch die der Strömungsregulator (5) am Steckplatz für den Prozessor festlegbar ist.

12. Computersystem nach einem der Ansprüche 10 oder 11, bei dem das Basiselement (8) so ausgebildet ist, dass es im eingesteckten Zustand den Steckplatz für den Prozessor abdeckt und vor Beschädigung und Verschmutzung schützt.

13. Computersystem nach einem der Ansprüche 9 bis 12, bei dem mehrere Steckplätzen für Prozessoren vorgesehen sind und bei dem in Steckplätze, die nicht mit einem Prozessor bestückt sind, der Strömungsregulator (5) eingesteckt ist.
